# EUROPÄISCHE PATENTSCHRIFT

(11) **EP 0 822 234 B1**
(45) Veröffentlichungstag und Bekanntmachung des Hinweises auf die Patenterteilung: **16.12.1998**
(21) Anmeldenummer: 97113170.1
(22) Anmeldetag: 31.07.1997
(51) Int. Cl.: C08L 83/07, C08K 5/3475

(54) **Additionsvernetzte Siliconelastomere mit verringertem Druckverformungsrest**
Addition-curable silicone elastomers having a reduced compression set
Elastomères d'organopolysiloxane durcissables par addition et ayant une déformation permanente réduite

(30) Priorität: 01.08.1996 DE 19631120
(43) Veröffentlichungstag der Anmeldung: 04.02.1998
(73) Patentinhaber: Wacker-Chemie GmbH, 81737 München (DE)
(72) Erfinder: Achenbach, Frank, Dr., 84359 Simbach/Inn (DE); Wörner, Christof, Dr., 84489 Burghausen (DE); Ostermeier, Brigitte, 84567 Erlbach (DE); Eberl, Georg, 84489 Burghausen (DE); Gegic, Jelica, 84489 Burghausen (DE)
(74) Vertreter: Fritz, Helmut, Dr.

(56) Entgegenhaltungen:
- EP-A- 0 388 201
- EP-A- 0 517 524
- EP-A- 0 620 248
- US-A- 5 073 583

## Beschreibung

Die Erfindung betrifft additionsvernetzbare Siliconkautschukmassen, welche 1H-Benzotriazol-5-carbonsäureester und/oder 1H-Benzotriazol-5-carbonsäureamide enthalten und Formkörper mit einem niedrigen Druckverformungsrest, herstellbar durch Vernetzung der Siliconkautschukmassen.

In zahlreichen Anwendungen additionsvernetzter Siliconelastomere ist es von besonderer Wichtigkeit, daß sich das Siliconelastomer bei einer Druckbelastung nicht bleibend verformt. Beispielsweise würde die Funktionstüchtigkeit einer Dichtung vermindert oder gänzlich aufgehoben, wenn sich diese unter Druckbelastung plastisch verhielte, denn mit zunehmender plastischer Verformung würde zugleich die aufgrund der Kompression des Elastomers auftretende Spannung, welche die Dichtheit garantiert, abnehmen. Folglich sollte der plastische Anteil am Deformationsverhalten unter Druckbelastung eines für derartige Anwendungen eingesetzten Siliconelastomers möglichst gering sein. Diese Materialeigenschaft läßt sich mit Hilfe des Druckverformungsrestes nach DIN 53 517 quantifizieren, wodurch unterschiedliche Materialien miteinander verglichen werden können. Die Bestimmung des Druckverformungsrestes erfolgt durch Bestimmung der Dicke eines zylinderförmigen Probekörpers vor und im Anschluß an eine permanente Stauchung von 25 %, welche während 22 h bei einer Temperatur von 175°C erfolgt. Findet vollständige Rückbildung statt, wobei die Dicke des Probekörpers vor und nach der Belastungsprozedur identisch ist, beträgt der Druckverformungsrest 0 %; bleibt hingegen die während des Tests auferlegte Stauchung von 25 % auch nach Entlastung bestehen, beträgt der Druckverformungsrest 100 %.

Additionsvernetzte Siliconelastomere weisen typischerweise einen Druckverformungsrest von bis zu 70 % auf. Um diesen zu verringern, ist es üblich, Siliconelastomere im Anschluß an die Vernetzungsreaktion einer Temperung zu unterwerfen. Die Temperung ist eine thermische Nachbehandlung des Siliconelastomers, die beispielsweise eine 4 h währende Lagerung bei 200°C unter Frischluftzufuhr umfaßt. Obgleich mittels einer Temperung sehr niedrige Druckverformungsreste erzielt werden können, stellt diese doch einen zeit- und energieintensiven, zusätzlichen Verfahrensschritt dar, den man bestrebt ist, zu vermeiden. Insbesondere ist man daran interessiert, Siliconkautschukmassen zu entwickeln, die bereits nach der Vernetzung niedrigste Druckverformungsreste aufweisen, so daß sich ein Tempern der hergestellten Formteile erübrigt.

Der Einsatz verschiedener Triazol- und Benzotriazolderivate als Additive zur gezielten Verringerung des Druckverformungsrestes additionsvernetzter Siliconelastomere ist in EP-A-517 524 und EP-A-388 201 beschrieben. In den Beispielen wird jeweils ausschließlich das als bevorzugt ausgewiesene 1H-Benzotriazol benutzt. Die dort aufgeführten Triazol- und Benzotriazolderivate sind in additionsvernetzenden Siliconkautschukmassen unlöslich, d.h., sie können nicht ohne weiteres homogen eingearbeitet werden. Die inhomogene Verteilung der Triazol- und Benzotriazolderivate in der Siliconkautschukmasse hat zur Folge, daß eine reproduzierbare Einstellung niedriger Werte des Druckverformungsrestes nicht möglich ist. Die Nichtlöslichkeit der Triazol- und Benzotriazolderivate verringert insbesondere die den Druckverformungsrest verringernde Wirksamkeit. Zudem kann, bedingt durch eine lokal überhöhte Konzentration an Triazol- und Benzotriazolderivat, eine unvollständige Vernetzung in Erscheinung treten. Diese Nachteile treten verstärkt in Erscheinung, wenn die Triazol- oder Benzotriazol-haltige Siliconkautschukmasse - wie üblich - vor der Vernetzung längere Zeit gelagert wurde, da eine zunehmende Vergröberung und Separation der Triazol- bzw. Benzotriazolverbindung eintritt.

Die Unlöslichkeit der Triazol- und Benzotriazolderivate führt zu einer Beeinträchtigung der Transparenz des Siliconelastomers durch Trübungen und Schlieren der sich bildenden Mikrokristallite. Eine homogene Verteilung der Triazol- und Benzotriazolderivate kann auch dadurch nicht erzielt werden, indem, wie in EP-A-388 201 beschrieben, die Einarbeitung mit Hilfe eines organischen Lösemittels erfolgt; vielmehr hat dies zur Folge, daß entweder eine inakzeptable Menge des Lösemittels in der Siliconkautschukmasse verbleibt, oder aber nach Entfernen des Lösemittels die Triazol- oder Benzotriazolverbindung wieder ausfällt.
Das Einbringen einer großen Menge an Triazol- oder Benzotriazolverbindung, um überall in der Siliconkautschukmasse eine ausreichende Konzentration zu sichern, führt auch nicht zum Ziel, da bei einer zu hohen Dosierung Vernetzungsstörungen die Folge sind.
In Abhängigkeit von der speziellen Zusammensetzung der additionsvernetzenden Siliconkautschukmasse weisen die Triazol- oder Benzotriazolverbindungen erhebliche Wirksamkeitsunterschiede auf.

Der vorliegenden Erfindung liegt die Aufgabe zugrunde, ein Additiv bereitzustellen, das der unvernetzten Siliconkautschukmasse zugesetzt werden kann und einen niedrigen Druckverformungsrest des ungetemperten Siliconelastomers bewirkt, ohne die Nachteile der bekannten Additive aufzuweisen.

Die Erfindung betrifft additionsvernetzbare Siliconkautschukmassen, welche die Bestandteile
(I) alkenylfunktionelles Polyorganosiloxan
(II) SiH-funktionelles Vernetzungsmittel
(III) Hydrosilylierungskatalysator und
(IV) 1H-Benzotriazol-5-carbonsäureester und/oder 1H-Benzotriazol-5-carbonsäureamide umfassen.

Die additionsvernetzbaren Siliconkautschukmassen enthalten zum Zwecke der Reduzierung des Druckverformungsrestes 1H-Benzotriazol-5-carbonsäureester und/oder 1H-Benzotriazol-5-carbonsäureamide. Die verwendeten 1H-Benzotriazol-5-carbonsäureester und/oder 1H-Benzotriazol-5-carbonsäureamide zeichnen sich dadurch aus, daß sie in der unvernetzten Siliconkautschukmasse sehr gut löslich sind und die Transparenz des daraus hergestellten Siliconelastomers nicht nachteilig beeinflussen. Die Löslichkeit der 1H-Benzotriazol-5-carbonsäureester und/oder 1H-Benzotriazol-5-carbonsäureamide erübrigt die Zuhilfenahme eines Lösemittels bei deren Einarbeitung in die Siliconkautschukmasse. Die den Druckverformungsrest reduzierende Wirksamkeit der 1H-Benzotriazol-5-carbonsäureester und/oder 1H-Benzotriazol-5-carbonsäureamide bleibt bei Lagerung der Siliconkautschukmasse unverändert; die Vernetzungscharakteristik wird nicht beeinträchtigt. Die 1H-Benzotriazol-5-carbonsäureester und/oder 1H-Benzotriazol-5-carbonsäureamide sind auch farblos. Des weiteren weisen die geringe Mengen an 1H-Benzotriazol-5-carbonsäureester und/oder 1H-Benzotriazol-5-carbonsäureamide enthaltenden Siliconelastomere bereits unmittelbar im Anschluß an die Vernetzungsreaktion extrem niedrige Werte des Druckverformungsrestes auf, so daß auf eine nachträgliche Temperung gänzlich verzichtet werden kann. Die Vollständigkeit der Vernetzung und die Vernetzungsgeschwindigkeit der Siliconkautschukmasse werden auch bei höheren Gehalten an 1H-Benzotriazol-5-carbonsäureester und/oder 1H-Benzotriazol-5-carbonsäureamiden nicht beeinträchtigt. Gleichfalls bleibt das mechanische Eigenschaftsprofil der Siliconelastomere, wie Härte, Reißfestigkeit und Reißdehnung, unverändert. Unabhängig von der speziellen Zusammensetzung der additionsvernetzenden Siliconkautschukmasse werden stets sehr niedrige Werte des Druckverformungsrestes erreicht.

Bestandteil (I) der erfindungsgemäßen Siliconkautschukmasse ist ein mindestens zwei Alkenylgruppen pro Molekül enthaltendes Polyorganosiloxan mit vorzugsweise einer Viskosität bei 25°C im Bereich von 0,1 bis 500 000 Pa·s, insbesondere von 1 bis 100 Pa·s.

Die Zusammensetzung des Alkenylgruppen enthaltenden Polyorganosiloxans (I) entspricht vorzugsweise der durchschnittlichen allgemeinen Formel (1)

RₐR¹ _{b}SiO_{(4-a-b)/2} (1),

in der
- **R**: gleiche oder verschiedene einwertige, gegebenenfalls halogen- oder cyanosubstituierte, gegebenenfalls über eine organische zweiwertige Gruppe an Silicium gebundene c₁-C₁₀-alkenyl reste,
- **R**^{**1**}: gleiche oder verschiedene einwertige, gegebenenfalls halogen- oder cyanosubstituierte, über SiC-gebundene C₁-C₁₀-Kohlenwasserstoffreste, die frei sind von aliphatischen Kohlenstoff-Kohlenstoff Mehrfachbindungen
- **a**: eine solche nichtnegative Zahl, daß mindestens zwei Reste R in jedem Molekül vorhanden sind, und
- **b**: eine nicht negative Zahl, so daß **(a+b)** im Bereich von 1.8 bis 2.5 liegt, bedeuten.

Die Alkenylgruppen **R** sind einer Anlagerungsreaktion mit einem SiH-funktionellen Vernetzungsmittel zugänglich. Üblicherweise werden Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, verwendet.

Organische zweiwertige Gruppen, über die die Alkenylgruppen an Silicium der Polymerkette gebunden sein können, bestehen beispielsweise aus Oxyalkyleneinheiten, wie solche der allgemeinen Formel (2)

- (o)_{c}[(CH₂)_{d}o]ₑ- (2),

in der
- **c**: die Werte 0 oder 1, insbesondere 0,
- **d**: Werte von 1 bis 4, insbesondere 1 oder 2 und
- **e**: Werte von 1 bis 20, insbesondere von 1 bis 5 bedeuten.
Die Oxyalkyleneinheiten der allgemeinen Formel (2) sind links an ein Siliciumatom gebunden.

Die Reste R können in jeder Position der Polymerkette, insbesondere an den endständigen Siliciumatomen, gebunden sein.

Beispiele für **R**^{**1**} sind Alkylgruppen, wie Methyl, Ethyl, Propyl, Butyl und Hexyl, Aryl- und Alkarylgruppen, wie Phenyl, Tolyl, Xylyl, Mesityl, Benzyl, β-Phenylethyl und Naphthyl, oder substituierte Gruppen, wie 3,3,3-Trifluorpropyl, o-, p- und m-Chlorphenyl, Bromtolyl und β-Cyanethyl. Bevorzugte Substituenten sind Fluor, Chlor und Brom. **R**^{**1**} weist vorzugsweise 1 bis 6 Kohlenstoffatome auf. Insbesondere bevorzugt sind Methyl und Phenyl.

Bestandteil (I) kann auch eine Mischung verschiedener Alkenylgruppen enthaltender Polyorganosiloxane sein, die sich beispielsweise im Alkenylgruppengehalt, der Art der Alkenylgruppe oder strukturell unterscheiden.

Die Struktur der Alkenylgruppen enthaltenden Polyorganosiloxane kann linear, cyclisch oder auch verzweigt sein. Verzweigte Polyorganosiloxane enthalten neben monofunktionellen Einheiten, wie RR¹₂SiO_{1/2} und R¹₃SiO_{1/2}, und difunktionellen Einheiten, wie R¹₂SiO_{2/2} und RR¹SiO_{2/2}, auch trifunktionelle Einheiten, wie RSiO_{3/2} und R¹SiO_{3/2}, und/oder tetrafunktionelle Einheiten der Formel SiO_{4/2}. Der Gehalt an diesen zu verzweigten Polyorganosiloxanen führenden tri- und/oder tetrafunktionellen Einheiten, ist typischerweise sehr gering, nämlich vorzugsweise höchstens 20 Mol-%, insbesondere höchstens 0,1 Mol-%. Das Alkenylgruppen enthaltende Polyorganosiloxan (I) kann auch Einheiten der allgemeinen Formel (3)

-OSi(R^{**2**}R^{**3**})R^{**5**}Si(R^{**2**}R^{**3**}) (3),

enthalten,
wobei
- **R**^{**2**} und **R**^{**3**}: die vorstehend für **R** und **R**^{**1**} angegebenen Bedeutungen haben und
- R^{**5**}: einen zweiwertigen organischen Rest, wie Ethylen, Propylen, Phenylen, Diphenylen oder einen Rest der allgemeinen Formel (2) bedeuten.

Einheiten der allgemeinen Formel (3) können bis zu einem Anteil von 50 Mol-% in (I) enthalten sein.
Besonders bevorzugt ist die Verwendung Vinylgruppen enthaltender Polydimethylsiloxane, deren Moleküle der allgemeinen Formel (4)

(ViMe₂SiO_{1/2})₂(ViMeSiO)_{f}(Me₂SiO)_{g} (4),

entsprechen, wobei die nichtnegativen ganzen Zahlen **f** und **g** folgende Relationen erfüllen: **f**+1>0, 50<(**f+g**)<20000, vorzugsweise 200<(**f+g**)<1000, und 0<(**f**+1)/(**f+g**)<0.2.

Bestandteil (II) der erfindungsgemäßen Siliconkautschukmasse ist ein SiH-funktionelles Vernetzungsmittel, dessen Zusammensetzung der nachfolgenden durchschnittlichen Formel (5) entspricht

HₕR⁶ ᵢSiO_{(4-h-i)/2} (5),

in der
- **R**^{**6**}: die Bedeutungen von **R**^{**1**} haben und
- **h** und **4i**: nichtnegative ganze Zahlen mit der Maßgabe sind, daß 0.5<(**h+i**)<3,0 und 0<**h**<2, so daß mindestens zwei siliciumgebundene Wasserstoffatome pro Molekül vorhanden sind.

Bevorzugt ist die Verwendung eines drei oder mehr SiH-Bindungen pro Molekül enthaltenden Vernetzungsmittels (II). Bei Verwendung eines nur zwei SiH-Bindungen pro Molekül aufweisenden Agens, empfiehlt sich die Verwendung eines Alkenylgruppen enthaltenden Polyorganosiloxans (I), das über mindestens drei Alkenylgruppen pro Molekül verfügt.

Der Wasserstoffgehalt des Vernetzungsmittels (II), welcher sich ausschließlich auf die direkt an Siliciumatome gebundenen Wasserstoffatome bezieht, liegt vorzugsweise im Bereich von 0,002 bis 1,7 Gew.-% Wasserstoff, vorzugsweise von 0,1 bis 1,7 Gew. -% Wasserstoff.

Der SiH-funktionelle Vernetzer (II) enthält vorzugsweise mindestens drei und höchstens 600 Siliciumatome pro Molekül. Bevorzugt ist die Verwendung von SiH-Vernetzern (II), die 4 bis 200 Siliciumatome pro Molekül enthalten.

Die Struktur des SiH-Vernetzers (II) kann linear, verzweigt, cyclisch oder netzwerkartig sein. Lineare und cyclische SiH-Vernetzer (II) sind Organosiloxane, deren Moleküle aus Einheiten der Formel HR⁶₂SiO_{1/2}, R⁶₃SiO_{1/2}, HR⁶SiO_{2/2} und R⁶₂SiO_{2/2} zusammengesetzt sind, wobei R⁶ die vorstehend angegebene Bedeutung hat. Verzweigte und netzwerkartige SiH-Vernetzer (II) enthalten zusätzlich trifunktionelle Einheiten der Formel HSiO_{3/2} und/oder R⁶SiO_{3/2} und/oder tetrafunKtionelle Einheiten der Formel SiO_{4/2}. Mit zunehmendem Gehalt an tri- und/oder tetrafunktionellen Einheiten weisen diese Vernetzungsmittel (II) eine harzartige, netzwerkartige Struktur auf. Die im SiH-Vernetzungsmittel (II) enthaltenen organischen Reste R⁶ werden üblicherweise so gewählt, daß diese mit den im Bestandteil (I) befindlichen Resten verträglich sind, so daß die Bestandteile (I) und (II) mischbar sind.

Als SiH-Vernetzer (II) können auch Kombinationen und Mischungen der hier beschriebenen SiH-funktionellen Vernetzungsmittel (II) verwendet werden.

Besonders bevorzugte SiH-Vernetzer sind lineare Polyorganosiloxane der allgemeinen Formel (7)

(HR⁷ ₂SiO_{1/2})ⱼ(R⁷ ₃SiO_{1/2})ₖ(HR⁷SiO_{2/2})ₗ(R⁷ ₂SiO_{2/2})ₘ (7),

wobei
- **R**^{**7**}: die Bedeutungen von **R**^{**1**} haben und die nichtnegativen ganzen Zahlen **j, k, l** und **m** folgende Relationen erfüllen: (**j+k**)=2, (**j+1**)>2, 5<(**1+m**)<200 und 1<**l**/(**1+m**) <0.1.

Der SiH-funktionelle Vernetzer ist vorzugsweise in einer solchen Menge in der vernetzbaren Siliconkautschukmasse enthalten, daß das Molverhältnis von SiH-Gruppen zu Alkenylgruppen bei 0,5 bis 5, insbesondere bei 1,0 bis 3,0 liegt.

Bestandteil (III) dient als Katalysator für die als Hydrosilylierung bezeichnete Additionsreaktion zwischen den Alkenylgruppen des Bestandteils (I) und den siliciumgebundenen Wasserstoffatomen des Bestandteils (II). In der Literatur sind zahlreiche geeignete Hydrosilylierungskatalysatoren beschrieben. Prinzipiell können alle dem Stand der Technik entsprechenden und in additionsvernetzenden Siliconkautschukmassen eingesetzten Hydrosilylierungskatalysatoren verwendet werden.

Als Hydrosilylierungskatalysatoren (III) können Metalle und deren Verbindungen, wie Platin, Rhodium, Palladium, Ruthenium und Iridium, vorzugsweise Platin, eingesetzt werden. Die Metalle können gegebenenfalls auf feinteiligen Trägermaterialien, wie Aktivkohle, Metalloxiden, wie Aluminiumoxid oder Siliciumdioxid, fixiert sein.

Vorzugsweise werden Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln (PtCl₂·Olefin)₂ und H(PtCl₃·Olefin) verwendet werden, wobei bevorzugt Alkene mit 2 bis 8 Kohlenstoffatomen, wie Ethylen, Propylen, Isomere des Butens und Octens, oder Cycloalkane mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl₂C₃H₆)_{2,} die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Besonders bevorzugt sind Komplexe des Platins mit Vinylsiloxanen, wie sym-Divinyltetramethyldisiloxan.

Der Hydrosilylierungskatalysator (III) kann auch in mikroverkapselter Form eingesetzt werden, wobei der den Katalysator enthaltende und im Polyorganosiloxan unlösliche feinteilige Feststoff beispielsweise ein Thermoplast, wie Polyesterharz oder Siliconharz ist. Der Hydrosilylierungskatalysator (III) kann auch in Form einer Einschlußverbindung, beispielsweise in einem Cyclodextrin, eingesetzt werden.

Die Menge des eingesetzten Hydrosilylierungskatalysators (III) 5 richtet sich nach der gewünschten Vernetzungsgeschwindigkeit sowie ökonomischen Gesichtpunkten. Bei Verwendung gebräuchlicher Platin-Katalysatoren liegt der Gehalt der vernetzbaren Siliconkautschukmasse bezogen auf Platin-Metall vorzugsweise im Bereich von 0.1 bis 500 Gew.-ppm, insbesondere bei 10 bis 100 Gew.-ppm Platin-Metall.

Bestandteil (IV) der erfindungsgemäßen Siliconkautschukmasse ist ein 1H-Benzotriazol-5-carbonsäureester und/oder 1H-Benzotriazol-5-carbonsäureamid. Der in der Estergruppierung 5 enthaltene monovalente Rest fördert die Löslichkeit des 1H-Benzotriazol-5-carbonsäureesters und/oder 1H-Benzotriazol-5-carbonsäureamids (IV) in der Siliconkautschukmasse. Bevorzugt sind 1H-Benzotriazol-5-carbonsäureester und/oder 1H-Benzotriazol-5-carbonsäureamide (IV) der allgemeinen Formel (8) 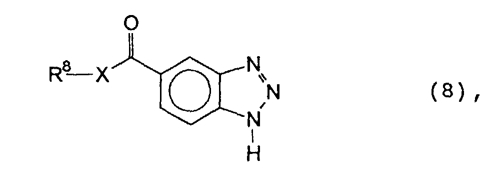 in der
- **R**^{**8**}: einen gegebenenfalls halogen- oder cyanosubstituierten C₂-C₂₀-Kohlenwasserstoffrest oder einen Organosiloxan-Rest und
- **X**: einen zweiwertigen Rest -O- oder -NR¹¹- bedeuten, wobei R¹¹ die Bedeutungen H- oder R⁸ aufweist.

Beispiele für die Kohlenwasserstoffreste **R**^{**8**} sind die vorstehend für **R** und **R**^{**1**} aufgeführten Beispiele für aliphatisch gesättigte und ungesättigte Kohlenwasserstoffreste. Bevorzugte Substituenten sind Fluor, Chlor und Brom. Bevorzugt sind aliphatisch gesättigte Kohlenwasserstoffreste. Vorzugsweise enthalten die Kohlenwasserstoffreste **R**^{**8**} 3 bis 15, insbesondere 5 bis 10 Kohlenstoffatome. Besonders bevorzugte Reste **R**^{**8**} sind Alkylreste mit 5 bis 10 Kohlenstoffatomen.

Die Siloxanreste **R**^{**8**} können Oligo- bzw. Polyorganosiloxanreste sein. Vorzugsweise weisen die Siloxanreste **R**^{**8**} gegebenenfalls halogen- oder cyanosubstituierte Kohlenwasserstoffreste mit 1 bis 12 Kohlenstoffatomen auf. Vorzugsweise enthalten die Siloxanreste **R**^{**8**} 1 bis 150, insbesondere 2 bis 50 Siliciumatome.

Die Siloxanreste **R**^{**8**} bestehen vorzugsweise aus mindestens 50 Mol-%, insbesondere aus mindestens 90 Mol-% Einheiten der Formel R⁹₂SiO_{2/2}, wobei auch R⁹₃SiO_{1/2}, R⁹SiO_{3/2} und SiO_{4/2}-Einheiten enthalten sein können und **R**^{**9**} einen beliebigen gegebenenfalls halogen- oder cyanosubstituierten Kohlenwasserstoffrest mit 1 bis 12 Kohlenstoffatomen bezeichnet. Bevorzugte Reste **R**^{**9**} sind der Methyl- und Phenylrest.

Beispiele für Reste **R**^{**8**} sind: -SiMe_{**3**}, -SiMe_{**2**}-O-SiMe_{**3**}, -CH_{**2**}CH_{**2**}-SiMe_{**2**}-O-SiMe_{**2**}-O-SiMe_{**3**} und -CH_{**2**}CH_{**2**}CH_{**2**}-SiMe_{**2**}-O(SiMe_{**2**}O)_{**n**}-SiMe_{**3**}, wobei
- **n**: einen Wert von 0 bis 100, und
- **Me**: eine Methylgruppe bedeuten.

Besonders bevorzugt ist der 1H-Benzotriazol-5-carbonsäureoctylester. Der Gehalt der erfindungsgemäßen Siliconkautschukmasse an 1H-Benzotriazol-5-carbonsäureester und/oder 1H-Benzotriazol-5-carbonsäureamid (IV) beträgt vorzugsweise 0,005 bis 1,0 Gew.-%, besonders bevorzugt 0,01 bis 0,1 Gew.-%, insbesondere 0,02 bis 0,05 Gew.-%. Es können Mischungen verschiedener 1H-Benzotriazol-5-carbonsäureester und/oder 1H-Benzotriazol-5-carbonsäureamide verwendet werden.

Um eine ausreichend hohe mechanische Festigkeit des Siliconkautschuks zu erzielen, ist es bevorzugt, aktiv verstärkende Füllstoffe als Bestandteil (V) in die Siliconkautschukmasse einzuarbeiten. Als aktiv verstärkende Füllstoffe (V) werden vor allem gefällte und pyrogene Kieselsäuren, sowie Gemische derselben verwendet. Die spezifische Oberfläche dieser aktiv verstärkenden Füllstoffe sollte mindestens 50 m^{**2**}/g betragen oder vorzugsweise im Bereich von 100 bis 400 m^{**2**}/g gemäß der Bestimmung nach der BET-Methode liegen. Derartige aktiv verstärkende Füllstoffe sind auf dem Gebiet der Siliconkautschuke sehr gut bekannte Materialien.

Die Verwendung hydrophober Füllstoffe (V) ist besonders vortei1Haft, da diese auf einfache Weise direkt in den Bestandteil (I) eingemischt werden können, während sich beim Einmischen hydrophiler Füllstoffe die Zugabe eines Hydrobhobierungsmittels erforderlich macht. Verfahren zur Herstellung hydrophober Füllstoffe und deren Verwendung in Siliconkautschuken gehören zum Stand der Technik.

Der Gehalt der vernetzbaren Siliconkautschukmasse an aktiv verstärkendem Füllstoff (V) liegt im Bereich von 0 bis 60 Gew.-%, vorzugsweise bei 10 bis 40 Gew.-%.

Die erfindungsgemäße Siliconkautschukmasse kann wahlweise als Bestandteil (VI) weitere Zusätze zu einem Anteil von bis zu 70 Gew.-%, vorzugsweise von 0,01 bis 40 Gew.-%, enthalten. Diese Zusätze können z.B. Füllstoffe, Dispergierhilfsmittel, Haftvermittler, Inhibitoren, Pigmente, Farbstoffe, Weichmacher, Hitzestabilisatoren usw. sein.

Hierzu zählen Zusätze, wie Quarzmehl, Diatomeenerde, Tone, Kreide, Lithopone, Ruße, Graphit, Metalloxide, -carbonate, -sulfate, Metallstäube, Fasern, Farbstoffe, Pigmente usw. Insbesondere können harzartige Polyorganosiloxane, die im wesentlichen aus Einheiten der Formel R¹⁰SiO_{1/2}, R¹⁰SiO_{3/2} und SiO_{4/2}, gegebenenfalls auch R¹⁰SiO_{2/2}, bestehen, wobei **R**^{**10**} die Bedeutungen von **R**^{**9**} hat, bis zu einem Anteil von 70 Gew.-%, vorzugsweise bis zu 40 Gew.-%, bezogen auf die gesamte Siliconkautschukmasse, enthalten sein. Das Molverhältnis zwischen monofunktionellen und tri- oder tetrafunktionellen Einheiten dieser Siliconharze liegt vorzugsweise im Bereich von 0,5 : 1 bis 1,5 : 1. Es können auch funktionelle Gruppen **R**^{**10**}, insbesondere Alkenylgruppen **R**^{**10**} enthalten sein.

Enthalten sein können insbesondere Zusätze, die der gezielten Einstellung der Verarbeitungszeit und Vernetzungsgeschwindigkeit der härtbaren Siliconkautschukmasse dienen. Diese Inhibitoren und Stabilisatoren sind auf dem Gebiet der additionsvernetzenden Massen sehr gut bekannt. Beispiele gebräuchlicher Inhibitoren sind acetylenische Alkohole, wie Ethinylcyclohexanol und 2-Methyl-3-butin-2-ol, Polymethylvinylcyclosiloxane, wie Methylvinylcyclotetrasiloxan, niedermolekulare Siliconöle mit MethylvinylSiO_{1/2}-Endgruppen, Trialkylcyanurate, Alkylmaleate, wie Diallylmaleat und Dimethylmaleat, Alkylfumarate, wie Diethylfumarat und Diallylfumarat, organische Hydroperoxide, wie Cumolhydroperoxid, tert.-Butylhydroperoxid und Pinanhydroperoxid, organische Peroxide, organische Sulfoxide, organische Amine und Amide, Phosphine und Phosphite, Nitrile, Diaziridine und Oxime.

Die erfindungsgemäßen Siliconkautschukmassen eignen sich besonders zur Herstellung formbeständiger Siliconelastomerformkörper, welche statisch- und/oder dynamisch-mechanisch beansprucht werden, wie Dichtungen, Dichtungsmaterialien, Dämpfungselemente, Schläuche und Folien, die ebenfalls Gegenstand der Erfindung sind.

In den nachfolgenden Beispielen sind, falls jeweils nicht anders angegeben,
a) alle Mengenangaben auf das Gewicht bezogen;
b) alle Drücke 0,10 MPa (abs.);
c) alle Temperaturen 20°C

### Beispiele

### Beispiel 1:

Jeweils 100 g der beiden Komponenten einer additionsvernetzenden Polydimethylsiloxanflüssigkautschukmasse (Elastosil® LR 3003/50 von Wacker-Chemie GmbH) werden auf einer Walze bei einer Temperatur der Walzen von 25°C mit 0.02, 0.04, 0.1 bzw. 0.2 g 1H-Benzotriazol-5-carbonsäureoctylester während 5 Minuten innig vermischt. Diese Mischung wird anschließend in einer hydraulischen Presse bei einer Temperatur von 170°C während 5 Minuten zu einer Siliconelastomerfolie vernetzt. Die entformten, ca. 2 mm bzw. 6 mm dicken Siliconelastomerfolien werden nicht getempert, sondern im ungetemperten Zustand hinsichtlich des Druckverformungsrestes sowie weiterer Elastomereigenschaften charakterisiert.

### Vergleichsbeispiel 2 (nicht erfindungsgemäß):

Wie in Beispiel 1 beschrieben, jedoch gänzlich ohne Benzotriazolverbindung.

### Vergleichsbeispiel 3 (nicht erfindungsgemäß):

Wie in Beispiel 1 beschrieben, jedoch wird anstelle des in Beispiel 1 verwendeten 1H-Benzotriazol-5-carbonsäureoctylesters jeweils die gleiche Menge an 1H-Benzotriazol eingesetzt. Die übrige Zusammensetzung der Siliconkautschukmasse sowie die Weiterverarbeitung bleiben unverändert.

### Vergleichsbeispiel 4 (nicht erfindungsgemäß):

Wie in Beispiel 1 beschrieben, jedoch werden anstelle des in Beispiel 1 verwendeten 1H-Benzotriazol-5-carbonsäureoctylesters 0.1 g 1-Methyl-benzotriazol eingesetzt. Die übrige Zusammensetzung der Siliconkautschukmasse sowie die Weiterverarbeitung bleiben unverändert.

### Vergleichsbeispiel 5 (nicht erfindungsgemäß):

Wie in Beispiel 1 beschrieben, jedoch werden anstelle des in Beispiel 1 verwendeten 1H-Benzotriazol-5-carbonsäureoctylesters 0.1 g 1-Hydroxy-benzotriazol eingesetzt. Die übrige Zusammensetzung der Siliconkautschukmasse sowie die Weiterverarbeitung bleiben unverändert.

### Vergleichsbeispiel 6 (nicht erfindungsgemäß):

Wie in Beispiel 1 beschrieben, jedoch werden anstelle des in Beispiel 1 verwendeten 1H-Benzotriazol-5-carbonsäureoctylesters 0.1 g 5-Methyl-benzotriazol eingesetzt. Die übrige Zusammensetzung der Siliconkautschukmasse sowie die Weiterverarbeitung bleiben unverändert.

### Vergleichsbeispiel 7 (nicht erfindungsgemäß):

Wie in Beispiel 1 beschrieben, jedoch werden anstelle des in Beispiel 1 verwendeten 1H-Benzotriazol-5-carbonsäureoctylesters 0.04 bzw. 0.1 g 1H-1,2,3-Triazol eingesetzt. Die übrige Zusammensetzung der Siliconkautschukmasse sowie die Weiterverarbeitung bleiben unverändert.

### Vergleichsbeispiel 8 (nicht erfindungsgemäß):

Wie in Beispiel 1 beschrieben, jedoch werden anstelle des in Beispiel 1 verwendeten 1H-Benzotriazol-5-carbonsäureoctylesters 0.04 g 1,2,4-Triazol eingesetzt. Die übrige Zusammensetzung der Siliconkautschukmasse sowie die Weiterverarbeitung bleiben unverändert.

### Vergleichsbeispiel 9 (nicht erfindungsgemäß):

Wie in Beispiel 1 beschrieben, jedoch werden anstelle des in Beispiel 1 verwendeten 1H-Benzotriazol-5-carbonsäureoctylesters 0.06 g 4-Amino-1,2,4-triazol eingesetzt. Die übrige Zusammensetzung der Siliconkautschukmasse sowie die Weiterverarbeitung bleiben unverändert.

### Vergleichsbeispiel 10 (nicht erfindungsgemäß):

Wie in Beispiel 1 beschrieben, jedoch werden anstelle des in Beispiel 1 verwendeten 1H-Benzotriazol-5-carbonsäureoctylesters 0.06 g 3-Amino-1,2,4-triazol eingesetzt. Die übrige Zusammensetzung der Siliconkautschukmasse sowie die Weiterverarbeitung bleiben unverändert.

### Beispiel 11:

220 Masseteile eines Vinyldimethylsiloxy-terminierten Polydimethylsiloxans, das bei 25°C eine Viskosität von 20 Pa.s aufweist, werden mit 40 Masseteilen Hexamethyldisilazan, 15 Masseteilen entsalztem Wasser und 140 Masseteilen pyrogener Kieselsäure mit einer spezifischen Oberfläche nach BET von 300 m²/g (Wacker® HDK T30 von Wacker-Chemie GmbH), die portionsweise zugegeben und eingemischt wird, bei Raumtemperatur während 1.5 Stunden in einem Doppel-Z-Kneter zu einer homogenen Masse vermischt. Zwecks Entfernung flüchtiger Bestandteile und Nebenprodukte, wird die Mischung anschließend während 3 Stunden bei 150°C unter Vakuum (<100 mbar) geknetet. Nach dieser Ausheizphase werden weitere 200 Masseteile des Vinyl-funktionellen Polydimethylsiloxans portionsweise eingemischt und die Masse während 1 Stunde bei Raumtemperatur homogenisiert. Es wird eine ca. 25 Gew.-% Füllstoff enthaltende homogene Grundmasse erhalten.

196.0 g der erhaltenen Grundmasse werden auf einer Walze bei einer Temperatur der Walzen von 25°C mit 0.1 g Ethinylcyclohexanol, 3.5 g eines Copolymers bestehend aus Dimethylsiloxy-Methylhydrogensiloxy- und Trimethylsiloxy-Einheiten mit einer Viskosität von 320 mPa.s bei 25°C und 0.48 Gew.-% Si-gebundenem Wasserstoff, 0.05 g 1H-Benzotriazol-5-carbonsäureoctylester und 0.2 g einer 1 Gew.-% Platin, bezogen auf elementares Platin enthaltenden Lösung eines Platin-sym-divinyltetramethyldisiloxan-Komplexes in einem Dimethylvinylsiloxy-endständigen Polydimethylsiloxan, das bei 25°C eine Viskosität von 1 Pa.s aufweist (Katalysator OL von Wacker-Chemie GmbH) während 5 Minuten innig vermischt. Diese Mischung wird anschließend in einer hydraulischen Presse bei einer Temperatur von 170°C während 5 Minuten zu einer Siliconelastomerfolie vernetzt. Die entformten, ca. 2 mm bzw. 6 mm dicken Siliconelastomerfolien werden nicht getempert und im ungetemperten Zustand hinsichtlich des Druckverformungsrestes sowie weiterer Elastomereigenschaften charakterisiert.

### Vergleichsbeispiel 12 (nicht erfindungsgemäß):

Entspricht Beispiel 11, jedoch wird auf den Zusatz von 1H-Benzotriazol-5-carbonsäureoctylester verzichtet.

### Beispiel 13:

Wie in Beispiel 11 beschrieben, mit Ausnahme der nach der Ausheizphase zugesetzten Menge an Vinyl-funktionellem Polydimethylsiloxan, welche auf 140 g verringert wird. Der Füllstoffgehalt der hergestellten Grundmasse erhöht sich dadurch auf ca. 30 Gew.-%.

### Vergleichsbeispiel 14 (nicht erfindungsgemäß):

Entspricht Beispiel 13, jedoch wird auf den Zusatz von 1H-Benzotriazol-5-carbonsäureoctylester verzichtet.

### Beispiel 15:

Wie in Beispiel 11 beschrieben, mit Ausnahme der nach der Ausheizphase zugesetzten Menge an Vinyl-funktionellem Polydimethylsiloxan, welche auf 40 g verringert wird. Der Füllstoffgehalt der hergestellten Grundmasse erhöht sich dadurch auf ca. 35 Gew.-%

### Vergleichsbeispiel 16 (nicht erfindungsgemäß):

Entspricht Beispiel 15, jedoch wird auf den Zusatz von 1H-Benzotriazol-5-carbonsäureoctylester verzichtet.

### Beispiel 17:

Jeweils 100 g der beiden Komponenten einer additionsvernetzenden Polydimethylsiloxanflüssigkautschukmasse (Elastosil® LR 3003/40 von Wacker-Chemie GmbH) werden auf einer Walze bei einer Temperatur der Walzen von 25°C mit 0.04 g 1H-Benzotriazol-5-carbonsäureoctylester während 5 Minuten innig vermischt. Diese Mischung wird anschließend in einer hydraulischen Presse bei einer Temperatur von 170°C während 5 Minuten zu einer Siliconelastomerfolie vernetzt. Die entformten, ca. 2 mm bzw. 6 mm dicken Siliconelastomerfolien werden nicht getempert und im ungetemperten Zustand hinsichtlich des Druckverformungsrestes sowie weiterer Elastomereigenschaften charakterisiert.

### Vergleichsbeispiel 18 (nicht erfindungsgemäß):

Entspricht Beispiel 17, mit dem Unterschied, daß auf den Zusatz von 1H-Benzotriazol-5-carbonsäureoctylester verzichtet wird.

### Beispiel 19:

Entspricht Beispiel 17, mit dem Unterschied, daß anstelle der Flüssigsiliconkautschukmasse Elastosil® LR 3003/40 die Type Elastosil® LR 3003/60 verwendet wird.

### Vergleichsbeispiel 20 (nicht erfindungsgemäß):

Entspricht Beispiel 19, mit dem Unterschied, daß auf den Zusatz von 1H-Benzotriazol-5-carbonsäureoctylester verzichtet wird.

### Beispiel 21:

Entspricht Beispiel 17, mit dem Unterschied, daß anstelle der Flüssigsiliconkautschukmasse Elastosil® LR 3003/40 die Type Elastosil® LR 3003/70 verwendet wird.

### Vergleichsbeispiel 22 (nicht erfindungsgemäß):

Entspricht Beispiel 21, mit dem Unterschied, daß auf den Zusatz von 1H-Benzotriazol-5-carbonsäureoctylester verzichtet wird.

Charakterisierung der Siliconelastomereigenschaften in den Tabellen 1 bis 4:

Die gemäß der Beispiele 1 bis 22 hergestellten erfindungsgemäßen und nichterfindungsgemäßen Siliconelastomere werden anhand folgender Kriterien bewertet:
a) Druckverformungsrest (DVR) gemäß DIN 53 517 anhand zylinderförmiger Probekörper gleicher Abmessungen (Durchmesser: 13 mm; Höhe: 6 mm) unter gleichen Bedingungen (Stauchung von 25 % während 22 Stunden bei einer Temperatur von 175°C).
   Die bei Verwendung unterschiedlicher Triazol- und Benzotriazolverbindungen resultierenden Werte des Druckverformungsrestes gemäß der Beispiele 1 bis 10 sind in Tabelle 1 angegeben. Während die als Additiv 1H-Benzotriazol-5-carbonsäureoctylester enthaltenden Elastomere nahezu unabhängig vom Gehalt des Additivs sehr niedrige Werte des Druckverformungsrestes aufweisen, vermögen andere Triazole- und Benzotriazole den Druckverformungsrest nur unzureichend zu verringern oder verursachen (insbesondere bei höheren Gehalten), erkennbar an der veränderten Shore A-Härte, massive Störungen der Vernetzungsreaktion; zudem wird die Transparenz des Elastomers infolge Schlieren-, Stippen- bzw. Kristallbildungen sehr nachteilig beeinträchtigt. Hervorzuheben ist die in Anbetracht der mehr als doppelt so großen Molmasse des 1H-Benzotriazol-5-carbonsäureoctylesters (M = 275 g/mol) verglichen mit 1H-Benzotriazol (M = 119 g/mol) wesentlich höhere Wirksamkeit.
b) Shore A gemäß DIN 53 505; Reißfestigkeit (RF) gemäß DIN 53 504-S1; Reißdehnung (RD) gemäß DIN 53 504-S1; Weiterreißwiderstand (WRW) gemäß ASTM D624 B-73; Rückprallelastizität (RPE) gemäß DIN 53 512-88.

Die in Tabelle 2 angegebenen Werte mechanischer Elastomereigenschaften belegen die hohe Druckverformungsrest-vermindernde Wirksamkeit des 1H-Benzotriazol-5-carbonsäureoctylesters, die sich als nahezu unabhängig vom Füllstoffgehalt des Siliconelastomers erweist; selbst bei sehr hohem Füllstoffgehalt werden niedrigste Werte des Druckverformungsrestes erzielt, ohne die übrigen mechanischen Elastomereigenschaften signifikant zu beeinträchtigen. Hingegen ist die Druckverformungsrest vermindernde Wirksamkeit anderer Triazole und Benzotriazole, wie insbesondere des 1H-Benzotriazols, allgemein mit einer nachteiligen Veränderung der mechanischen Elastomereigenschaften verknüpft (Tabelle 3). Tabelle 4 verdeutlicht, daß bereits sehr geringe Gehalte an 1H-Benzotriazol-5-carbonsäureoctylester unabhängig vom Typ des additionsvernetzenden Flüssigsiliconkautschuks niedrigste Werte des Druckverformungsrestes ermöglichen, ohne die übrigen mechanischen Elastomereigenschaften zu verändern. Die bewirkte drastische Verringerung des Druckverformungsrestes erübrigt ein nachträgliches Tempern der Siliconelastomere im Anschluß an die Vernetzungsreaktion.

**Tabelle 1:**

| Einfluß von Triazol- und Benzotriazolverbindungen auf Druckverformungsrest (DVR), Transparenz und Shore-A-Härte von Siliconelastomeren | | | | | |
|---|---|---|---|---|---|
| | Additiv | Gehalt an Additiv [Gew.-%] | Transparenz | DVR [%] | Shore A |
| Vergleichsbeispiel 2 | ohne | - | | 60 | 50 |
| Beispiel 1 | 1H-Benzotriazol-5-carbonsäureoctylester | 0.01 | keine Beeinträchtigung | 13 | 51 |
| | | 0.02 | | 10 | 51 |
| | | 0.05 | | 10 | 51 |
| | | 0.10 | | 10 | 50 |
| Vergleichsbeispiel 3 | 1H-Benzotriazol | 0.01 | Kriställchen und Schlieren | 17 | 50 |
| | | 0.02 | | 13 | 50 |
| | | 0.05 | | 14 | 48 |
| | | 0.10 | | 26 | 42 |
| Vergleichsbeispiel 4 | 1-Methylbenzotriazol | 0.05 | Stippen, Schlieren | 49 | 51 |
| Vergleichsbeispiel 5 | 1-Hydroxybenzotriazol | 0.05 | nadelförmige Kristalle | 37 | 49 |
| Vergleichsbeispiel 6 | 5-Methylbenzotriazol | 0.05 | Stippen | 20 | 50 |
| Vergleichsbeispiel 7 | 1H-1,2,3-Triazol | 0.02 | transparent | 43 | 44 |
| | | 0.05 | | 69 | 37 |
| Vergleichsbeispiel 8 | 1,2,4-Triazol | 0.02 | Stippen | 16 | 48 |
| Vergleichsbeispiel 9 | 4-Amino-1,2,4-triazol | 0.03 | Schlieren | 18 | 51 |
| Vergleichsbeispiel 10 | 3-Amino-1,2,4-triazol | 0.03 | Stippen | 21 | 50 |

**Tabelle 2:**

| Einfluß von 1H-Benzotriazol-5-carbonsäureoctylester (BTACOE) auf Druckverformungsrest (DVR) und Elastomereigenschaften in Abhängigkeit vom Füllstoffgehalt (FG) des Siliconelastomers | | | | | | | | |
|---|---|---|---|---|---|---|---|---|
| | Gehalt an BTACOE | FG [Gew.-%] | Shore A | RF [N/mm²] | RD [%] | WRW [N/mm] | RPE [%] | DVR [%] |
| Beispiel 11 | 0.025 Gew.-% | 25 | 43 | 6.1 | 540 | 18.0 | 66 | 14 |
| Beispiel 12* | ohne | 25 | 43 | 6.2 | 540 | 22.1 | 66 | 57 |
| Beispiel 13 | 0.025 Gew.-% | 30 | 47 | 8.5 | 600 | 25.4 | 61 | 14 |
| Beispiel 14* | ohne | 30 | 48 | 9.6 | 630 | 27.5 | 60 | 64 |
| Beispiel 15 | 0.025 Gew.-% | 35 | 52 | 8.7 | 590 | 35.2 | 55 | 16 |
| Beispiel 16* | ohne | 35 | 53 | 9.1 | 600 | 33.3 | 53 | 67 |

| | | | | | | | | |
|---|---|---|---|---|---|---|---|---|
| * Vergleichsbeispiel | | | | | | | | |

**Tabelle 3;**

| Einfluß von 1H-Benzotriazol-5-carbonsäureoctylester (BTACOE) und 1H-Benzotriazol (BTA) auf Druckverformungsrest (DVR) und Elastomereigenschaften | | | | | | | | |
|---|---|---|---|---|---|---|---|---|
| | Additiv | Gehalt [Gew.-%] | Shore A | RF [N/mm²] | RD [%] | WRW [N/mm] | RPE [%] | DVR [%] |
| Beispiel 2* | ohne | - | 50 | 9.2 | 560 | 31 | 69 | 60 |
| Beispiel 3* | BTA | 0.01 | 50 | 7.4 | 490 | 26 | 69 | 17 |
| Beispiel 3* | BTA | 0.02 | 50 | 7.0 | 480 | 28 | 68 | 13 |
| Beispiel 3* | BTA | 0.05 | 48 | 6.1 | 450 | 29 | 65 | 14 |
| Beispiel 3* | BTA | 0.10 | 42 | 5.4 | 490 | 31 | 54 | 26 |
| Beispiel 1 | BTACOE | 0.01 | 51 | 9.1 | 550 | 31 | 64 | 13 |
| Beispiel 1 | BTACOE | 0.02 | 51 | 8.9 | 530 | 31 | 62 | 10 |
| Beispiel 1 | BTACOE | 0.05 | 51 | 9.1 | 550 | 31 | 63 | 10 |
| Beispiel 1 | BTACOE | 0.10 | 50 | 8.7 | 540 | 30 | 60 | 10 |

| | | | | | | | | |
|---|---|---|---|---|---|---|---|---|
| * Vergleichsbeispiel | | | | | | | | |

**Tabelle 4:**

| Einfluß von 1H-Benzotriazol-5-carbonsäureoctylester (BTACOE) auf Druckverformungsrest (DVR) und Elastomereigenschaften verschiedener Flüssigsiliconelastomer-Type | | | | | | | | |
|---|---|---|---|---|---|---|---|---|
| | Gehalt an BTACOE | Siliconelastomer Type | Shore A | RF [N/mm²] | RD [%] | WRW [N/mm] | RPE [%] | DV [%] |
| Beispiel 17 | 0.02 Gew.-% | EI LR 3003/40 | 41 | 9.8 | 690 | 23.4 | 59 | 11 |
| Beispiel 18* | ohne | EI LR 3003/40 | 41 | 8.9 | 650 | 21.7 | 58 | 49 |
| Beispiel 1 | 0.02 Gew.-% | EI LR 3003/50 | 51 | 9.1 | 550 | 26.9 | 66 | 10 |
| Beispiel 2* | ohne | EI LR 3003/50 | 50 | 9.2 | 540 | 25.1 | 67 | 60 |
| Beispiel 19 | 0.02 Gew.-% | EI LR 3003/60 | 59 | 10.6 | 500 | 32.7 | 68 | 13 |
| Beispiel 20* | ohne | EI LR 3003/60 | 60 | 10.1 | 460 | 37.5 | 69 | 60 |
| Beispiel 21 | 0.02 Gew.-% | EI LR 3003/70 | 68 | 10.1 | 390 | 34.8 | 67 | 15 |
| Beispiel 22* | ohne | EI LR 3003/70 | 69 | 10.0 | 420 | 34.9 | 67 | 64 |

| | | | | | | | | |
|---|---|---|---|---|---|---|---|---|
| * Vergleichsbeispiel | | | | | | | | |

## Patentansprüche

1. Additionsvernetzbare Siliconkautschukmassen, welche die Bestandteile
(I) alkenylfunktionelles Polyorganosiloxan
(II) SiH-funktionelles Vernetzungsmittel
(III) Hydrosilylierungskatalysator und
(IV) 1H-Benzotriazol-5-carbonsäureester und/oder 1H-Benzotriazol-5-carbonsäureamide umfassen.

2. Siliconkautschukmassen nach Anspruch 1, bei denen die Zusammensetzung des Alkenylgruppen enthaltenden Polyorganosiloxans (I) der durchschnittlichen allgemeinen Formel (1)
RₐR¹ _{b}SiO_{(4-a-b)/2} (1),
entspricht, in der
**R** gleiche oder verschiedene einwertige, gegebenenfalls halogen- oder cyanosubstituierte, gegebenenfalls über eine organische zweiwertige Gruppe an Silicium gebundene C₁-C₁₀-Alkenyl, reste,
**R**^{**1**} gleiche oder verschiedene einwertige, gegebenenfalls halogen- oder cyanosubstituierte, über SiC-gebundene C₁-C₁₀-Kohlenwasserstoffreste, die frei sind von aliphatischen Kohlenstoff-Kohlenstoff Mehrfachbindungen
**a** eine solche nichtnegative Zahl, daß mindestens zwei Reste R in jedem Molekül vorhanden sind, und
**b** eine nicht negative Zahl, so daß **(a+b)** im Bereich von 1.8 bis 2.5 liegt, bedeuten.

3. Siliconkautschukmassen nach Anspruch 1 oder 2, bei denen die Zusammensetzung des SiH-funktionelle Vernetzungsmittels der nachfolgenden durchschnittlichen Formel (5)
HₕR⁶ ᵢSiO_{(4-h-i)/2} (5),
entspricht, in der
**R**^{**6**} die Bedeutungen von **R**^{**1**} haben und
**h** und **i** nichtnegative ganze Zahlen mit der Maßgabe sind, daß 0.5< (**h+i**) <3,0 und 0<h<2, so daß mindestens zwei siliciumgebundene Wasserstoffatome pro Molekül vorhanden sind.

4. Siliconkautschukmassen nach einem der Ansprüche 1 bis 3, bei denen die Hydrosilylierungskatalysatoren (III) ausgewählt werden aus Platin, Rhodium, Palladium, Ruthenium und Iridium und deren Verbindungen.

5. Siliconkautschukmassen nach einem der Ansprüche 1 bis 4, bei denen der Bestandteil (IV) ein 1H-Benzotriazol-5-carbonsäureester und/oder 1H-Benzotriazol-5-carbonsäureamid der allgemeinen Formel (8) 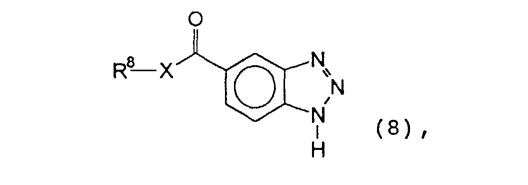 ist, in der
**R**^{**8**} einen gegebenenfalls halogen- oder cyanosubstituierten C2-C20-Kohlenwasserstoffrest oder einen Organosiloxan-Rest und
**X** einen zweiwertigen Rest -O- oder -NR¹¹- bedeuten, wobei R¹¹ die Bedeutungen H- oder R⁸ aufweist.

6. Siliconkautschukmassen nach einem der Ansprüche 1 bis 5, bei denen der Gehalt an 1H-Benzotriazol-5-carbonsäureester (IV) 0,005 bis 1,0 Gew.-% beträgt,

7. Formkörper, herstellbar durch Vernetzung der Siliconkautschukmassen gemäß einem der Ansprüche 1 bis 6.

## Claims

1. Addition-crosslinkable silicone rubber composition comprising as constituents
(I) alkenyl-functional polyorganosiloxane
(II) SiH-functional crosslinker
(III) hydrosilylation catalyst and
(IV) esters and/or amides of 1H-benzotriazole-5-carboxylic acid.

2. Silicone rubber composition according to Claim 1, wherein the formulation of the alkenylcontaining polyorganosiloxane (I) has the average general formula (1)
RₐR¹ _{b}SiO_{(4-a-b)/2} (1),
in which
R are identical or different monovalent C₁-C₁₀-alkenyl radicals which are bonded to silicon, optionally via a bifunctional organic group, and which are optionally halo- or cyano-substituted,
R¹ are identical or different monovalent SiC-bonded C₁-C₁₀-hydrocarbon radicals which have no aliphatic carbon-carbon multiple bonds and are optionally halo- or cyano-substituted,
a is a non-negative number such that at least two radicals R are present in every molecule, and
b is a non-negative number such that (a + b) is in the range from 1.8 to 2.5.

3. Silicone rubber composition according to Claim 1 or 2, wherein the formulation of the SiH-functional crosslinker has the following average formula (5)
HₕR⁶ ᵢSiO_{(4-h-i)/2} (5),
in which
R⁶ are as defined for R¹ and h and i are non-negative integers, with the proviso that 0.5 < (h + i) < 3.0 and 0 < h < 2, so that at least two hydrogen atoms bonded to silicon are present in each molecule.

4. Silicone rubber composition according to any one of Claims 1 to 3, wherein the hydrosilylation catalysts (III) are selected from the group consisting of platinum, rhodium, palladium, ruthenium and iridium and their compounds.

5. Silicone rubber composition according to any one of Claims 1 to 4, wherein the constituent (IV) is an ester and/or amide of 1H-benzotriazole-5-carboxylic acid which has the general formula (8) 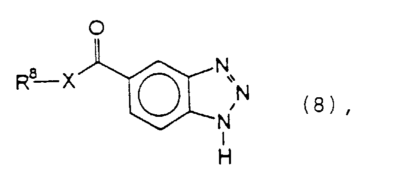 in which
R⁸ is a C₂-C₂₀-hydrocarbon radical which, if desired, may be halo- or cyano-substituted, or is an organosiloxane radical and
X is a bivalent radical -O- or -NR¹¹-, where R¹¹ is H-or R⁸.

6. Silicone rubber composition according to any one of Claims 1 to 5, which includes from 0.005 to 1.0 % by weight of an ester (IV) of 1H-benzotriazole-5-carboxylic acid.

7. Shaped articles which can be produced by crosslinking of the silicone rubber compositions according to any one of Claims 1 to 6.

## Revendications

1. Compositions de caoutchouc de silicone durcissables par addition, comprenant les constituants :
(I) polyorganosiloxane à fonctionnalité alkényle
(II) agent de réticulation à fonctionnalité SiH
(III) catalyseur d'hydrosilylation et
(IV) ester de l'acide 1H-benzotriazol-5-carboxylique et/ou amide de l'acide 1H-benzotriazol-5-carboxylique.

2. Compositions de caoutchouc de silicone selon la revendication 1, dans lesquelles la composition du polyorganosiloxane (I) contenant des groupements alkényle correspond à la formule générale moyenne
RₐR¹ _{b}SiO_{(4-a-b)/2} (1)
dans laquelle
R représente des radicaux alkényle univalents en C₁-C₁₀, identiques ou différents, éventuellement halogénés ou cyano-substitués, éventuellement liés au silicium par un groupement organique bivalent,
R¹ représente des radicaux hydrocarbure univalents en C₁-C₁₀, identiques ou différents, éventuellement halogénés ou cyano-substitués, liés par SiC, qui sont exempts de liaisons aliphatiques multiples carbone-carbone,
a est un nombre non négatif tel qu'au moins deux radicaux R soient présents dans chaque molécule, et
b est un nombre non négatif tel que (a+b) se trouve dans la plage de 1,8 à 2,5.

3. Compositions de caoutchouc de silicone selon la revendication 1 ou 2, dans lesquelles la composition de l'agent de réticulation à fonctionnalité SiH correspond à la formule moyenne (5) suivante
HₕR⁶ ᵢSiO_{(4-h-i)/2} (5)
dans laquelle
R⁶ a la même signification que R¹ eth et i sont des nombres entiers non négatifs, sous réserve que 0,5 < (h+i) < 3,0 et 0 < h < 2, de sorte qu'au moins deux atomes d'hydrogène liés par le silicium soient présents par molécule.

4. Compositions de caoutchouc de silicone selon l'une des revendications 1 à 3, dans lesquelles les catalyseurs d'hydrosilylation (III) sont choisis parmi le platine, le rhodium, le palladium, le ruthénium et l'iridium ainsi que leurs dérivés.

5. Compositions de caoutchouc de silicone selon l'une des revendications 1 à 4, dans lesquelles le constituant (IV) est un ester de l'acide 1H-benzotriazol-5-carboxylique et/ou amide de l'acide 1H-benzotriazol-5-carboxylique de formule générale (8) 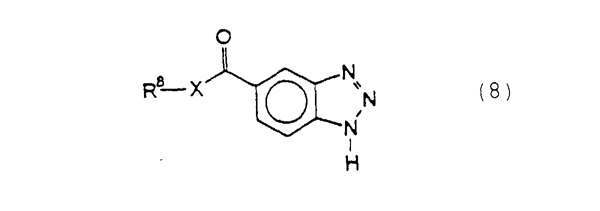 dans laquelle
R⁸ est un radical hydrocarbure en C₂-C₂₀, éventuellement halogéné ou cyano-substitué, ou un radical organosiloxane,
X représente un radical bivalent -O- ou -NR¹¹, R¹¹ représentant H- ou R⁸.

6. Compositions de caoutchouc de silicone selon l'une des revendications 1 à 5, dans lesquelles la teneur en ester de l'acide 1H-benzotriazol-5-carboxylique (IV) est de 0,005 à 1,0% en poids.

7. Article moulé, pouvant être fabriqué par réticulation des compositions de caoutchouc de silicone selon l'une des revendications 1 à 6.
